Europäisches Patentamt

European Patent Office

Office européen des brevets

(11) Veröffentlichungsnummer: **0 014 863**

A1

# EUROPÄISCHE PATENTANMELDUNG

(21) Anmeldenummer: 80100416.9

(22) Anmeldetag: 28.01.80

(51) Int. Cl.³: **F 24 F 7/08**
F 28 D 9/00

(30) Priorität: 22.02.79 DE 2906837

(43) Veröffentlichungstag der Anmeldung:
03.09.80 Patentblatt 80/18

(84) Benannte Vertragsstaaten:
AT BE CH FR GB IT LU NL SE

(71) Anmelder: FSL-Fenster-System-Lüftung GmbH & Co.
Vertriebs KG
Innstrasse 16
D-6800 Mannheim 24(DE)

(72) Erfinder: Gebhardt, Hans Günther
Schillerstrasse 2
D-6100 Darmstadt 13(DE)

(74) Vertreter: Mayer, Friedrich, Dr. et al,
Patentanwälte Dr. F. Mayer Dipl.-Phys. G. Frank
Westliche 24
D-7530 Pforzheim(DE)

(54) Kontinuierlicher Wärmeaustauscher für gasförmiges Fluidum.

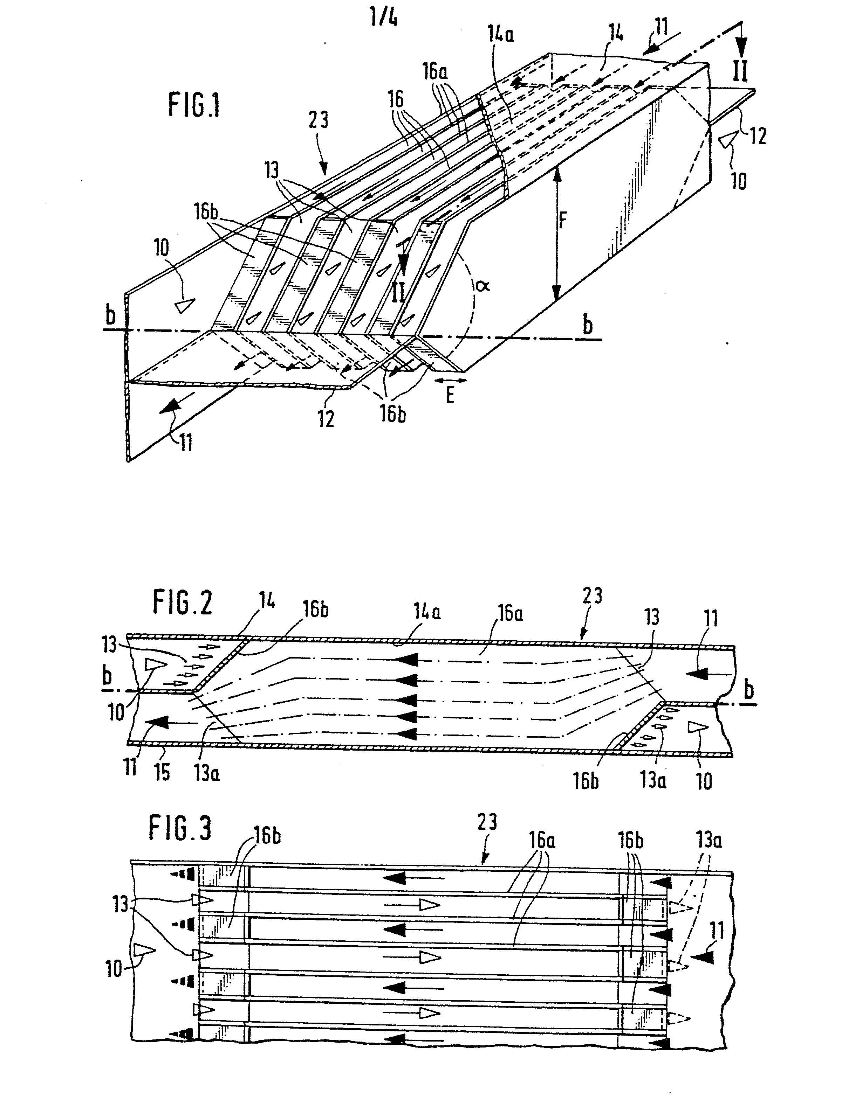

(57) Wärmeaustauscher für Gase für die Verwendung zur Raumlüftung. Der Wärmeaustausch zwischen Zuluft und Abluft erfolgt durch Aufteilung des Zuluftstromes und des Abluftstromes in mehrere Teilströme, die in benachbarten Zellen (16) an gemeinsamen Trennwänden (16a) vorbeigeführt werden. Dadurch wird eine erhebliche Erhöhung der Austauschfläche erreicht. Der Gesamtweg der Luftströme ist z.B. dabei wie folgt: die äußere Zuluft strömt von der oberen Hälfte des Zuluftquerschnittes über die Zellen 1,3,5,7,... in die untere Hälfte des Abluftquerschnittes, die Abluft strömt gegenläufig von der oberen Hälfte des Abluftquerschnittes durch die Zellen 2,4,6,8... über die untere Hälfte des Zuluftquerschnittes nach außen (Fig. 1).

FIG.1

- 1 -

Kontinuierlicher Wärmeaustauscher für gasförmiges Fluidum.

Die Erfindung betrifft einen Wärmeaustauscher der im Oberbegriff des Anspruches 1 angegebenen Gattung.

Wärmeaustauscher dieser Art sind bereits in sehr unterschiedlichen Ausbildungen, insbesondere als Plattenaustauscher bekannt. Bei diesen Plattenaustauschern ist es z. B. üblich, formgepreßte Platten, z.B. auf Holme aufzufädeln und mit Dichtungen gegeneinander zu pressen, wobei die Formgebung möglichst strömungsgünstige Kanäle für die wärmeaustauschenden Fluide ergeben soll. Solche Plattenaustauscher haben geringen Raumbedarf und sind bei gleicher Wärmeaustauschfläche z. B. billiger als Rohrbündelapparate. Sie sind außerdem verhältnismäßig leicht zu reinigen.

Es ist auch bereits bekannt, in Raumlüftungsanlagen den Abluft- und den Zuluftstrom durch eine Wärmeaustauschkammer zu führen, die einen drehbar gelagerten Wärmeaustauscher enthält (DE-OS 2 720 991).

Bei den bekannten Wärmeaustauschern der in Betracht gezogenen Art soll der in ihm auftretende Druckverlust der strömenden Medien möglichst klein gehalten werden, ohne daß durch zu geringe Strömungsgeschwindigkeit der Wärmeübergang verschlechtert wird. Auch ist der Einbau von wirbelerzeugenden Stromstörungselementen, die eine Folge von Anlaufstrecken ermöglichen und die laminare Grenzschicht zerstören als vorteilhaft im Verhältnis zu einer übermäßigen Steigerung der Strömungsgeschwindigkeit bekannt. Ausgehend von dem genannten Stand der Technik liegt der Erfindung die Aufgabe zugrunde, einen Wärmeaustauscher der eingangs genannten Gattung so weiterzubilden, daß der Wärmedurchgang (Wärmedurchgangszahl) durch einfache bauliche Maßnahmen, die eine rationelle Serienfertigung ermöglichen, bei vertretbarem Druckverlust, wesentlich gesteigert ist.

Diese Aufgabe wird erfindungsgemäß durch die im Kennzeichen des Anspruches 1 angegebenen Merkmale gelöst.

Weitere Ausgestaltungen der Erfindung ergeben sich aus den Unteransprüchen.

Nachstehend wird die Erfindung anhand der Zeichnung an einigen Ausführungsbeispielen erläutert.

Es zeigen:

Figur 1    den teilweise aufgerissenen Wärmeaustauscher in perspektivischer Darstellung,

Figur 2    den Wärmeaustauscher im Schnitt nach Linie II-II von Fig. 1,

Figur 3    den Wärmeaustauscher gemäß Figur 1 mit abgenommener breitseitiger Wandung in Draufsicht,

Figur 4    eine Variante des Wärmeaustauschers in einer der Figur 1 entsprechenden Darstellung,

Figur 5    die in eine Raumlüftungsanlage eingebaute Variante gemäß Figur 4 im vertikalen Längsschnitt und im kleineren Maßstab,

Figur 6    eine weitere Variante des Wärmeaustauschers in einer der Figur 2 entsprechenden Darstellung,

| Figur 7 | den Wärmeaustauscher gemäß Figur 6 in Draufsicht bei abgenommener breitseitiger Wandung, |
|---|---|
| Figur 8 | den in eine Raumlüftungsanlage eingebauten Wärmeaustauscher gemäß Figuren 1 - 3 im horizontalen Längsschnitt nach Linie VIII - VIII von Fig. 10, |
| Figur 9 | den Wärmeaustauscher gemäß Figur 8 in einem Schnitt nach Linie IX - IX von Fig. 8, |
| Figur 10 | den Wärmeaustauscher gemäß den Figuren 8, 9 in einem Schnitt nach Linie X - X von Fig. 9, |
| Figur 11 | den für eine große Raumlüftungsanlage ausgelegten Wärmeaustauscher gemäß Figur 4 im vertikalen Längsschnitt nach Linie XI-XI von Fig.13, |
| Figur 12 | den Wärmeaustauscher gemäß Figur 11 im horizontalen Längsschnitt nach Linie XII-XII von Figur 11, |
| Figur 13 | den Wärmeaustauscher nach Linie XIII - XIII von Figur 11, |
| Figur 14 | eine weitere Ausführungsform des Wärmeaustauschers, dessen Zellen den Querschnitt eines spitzwinkligen Dreieckes aufweisen, in schematischer Darstellung, |
| Figur 15 | eine weitere Ausführungsform des Wärmeaustauschers, dessen Zellenaggregat aus zwei ineinandersteckbaren spiegelsymmetrischen Formstücken gebildet ist und |
| Figur 16 | die halbschalenförmig ausgebildete Hälfte des Zellenaggregates des Wärmeaustauschers. |

In allen Ausführungsbeispielen münden der das Fluidum niedriger Temperatur führende Kanal 10 und der das Fluidum höherer Temperatur führende Kanal 11 in gegen-

- 4 -

sätzlichen Richtungen in ein Register 23 von Zellen
16. Die flach gestalteten Zellen haben Austauschflächen
16a, die zugleich die gemeinsamen Trennwände darstellen. In den zeichnerisch dargestellten Ausführungsbeispielen ist eine Mittelebene des Registers 23 zugleich die Symmetrieebene b-b. Die Eingänge 13 und die
Ausgänge 13a der Kanäle 10, 11 sind je auf einer Seite
der quer zu den Austauschflächen 16 a verlaufenden
Symmetrieebene b-b des Registers 23 angeordnet. Jede
zweite Zelle ist durch eine Stirnwand 16b; 16c; 16f
gegen den Zufluß des Fluidums aus dem einen Kanal 10
bzw. 11 gesperrt und für den Zufluß aus dem anderen
Kanal 11 bzw. 10 offen. Die beiden Kanäle 10, 11 sind
in den zeichnerisch dargestellten Ausführungsbeispielen
zumindest in ihrem registerseitigen Endabschnitt von
rechteckigem Querschnitt und weisen eine gemeinsame
Wandung 12 auf, die allerdings im Ausführungsbeispiel
der Figuren 11 - 13 von verhältnismäßig geringer Länge
ist. Diese gemeinsame Wandung liegt in der Symmetrieebene b-b des Registers 23.

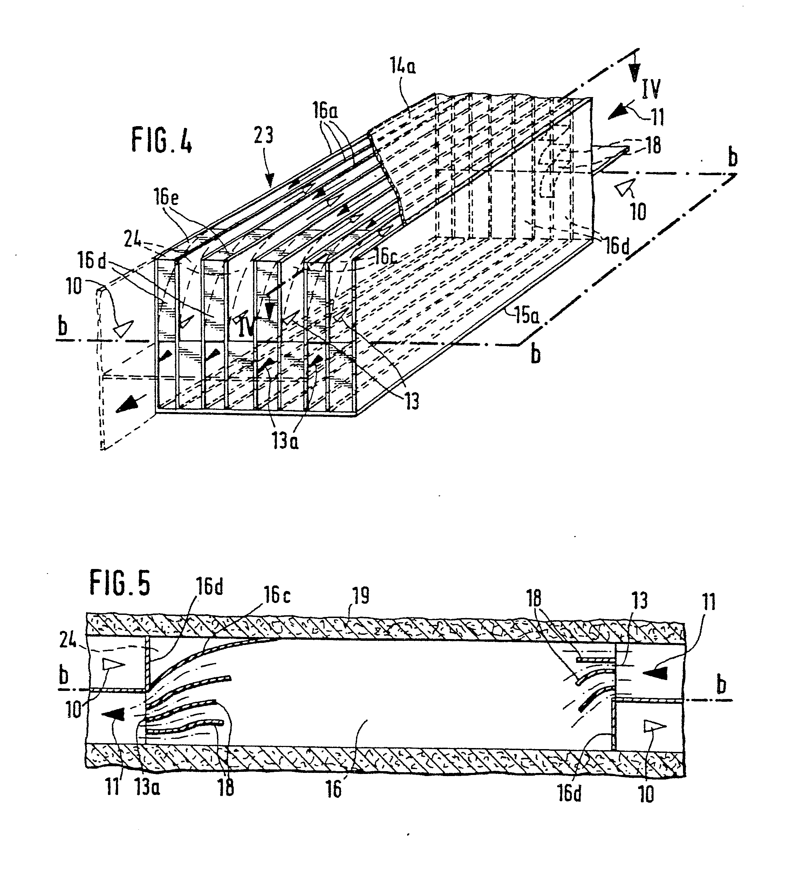

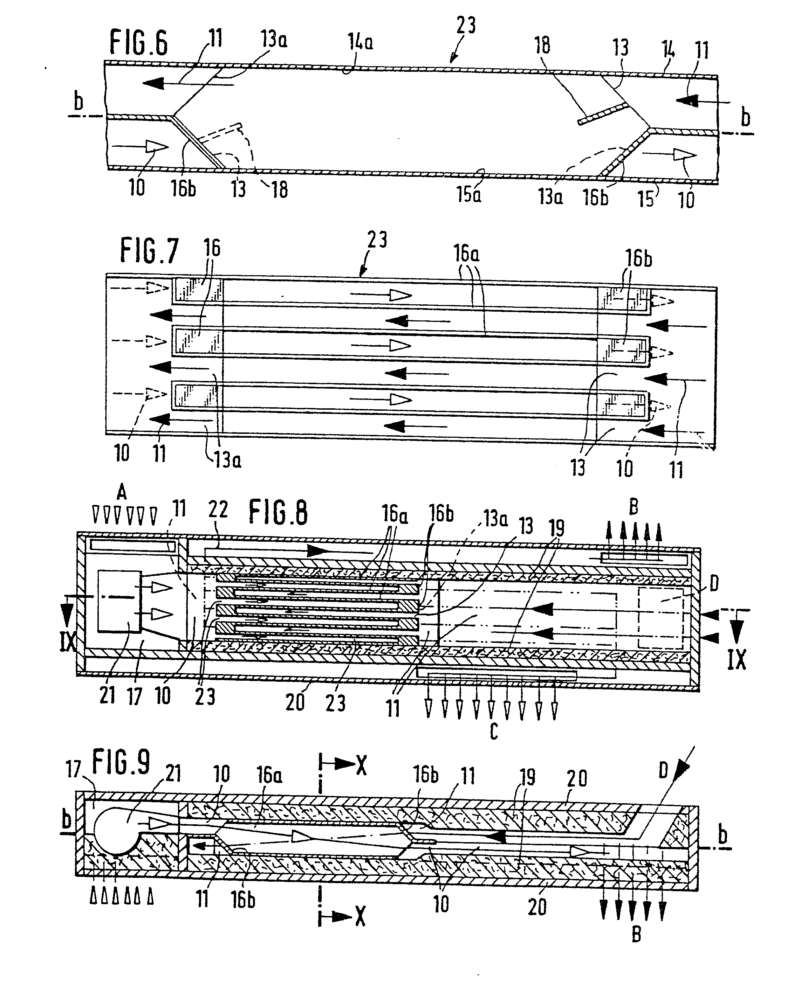

Die Austauschflächen 16a stehen im rechten Winkel zur
gemeinsamen Wandung 12 und damit auch zur Symmetrieebene b-b. Die schmalseitigen Wandungen der Zellen 16
sind durch eine Verlängerung 14a, 15a der breitseitigen
Wandungen 14, 15 der Kanäle 10, 11 gebildet. Die Zellen
16 grenzen ausschließlich über die Austauschflächen 16a
aneinander. In den Ausführungsbeispielen der Figuren 1-7
entspricht der Gesamtquerschnitt der Zellen 16a dem
Gesamtquerschnitt der Kanäle 10, 11. Die stirnseitigen
Wandugen 16b der Zellen, welche jede zweite Zelle 16 abschließen, stoßen in der Symmetrieebene b-b aneinander.
Mit Ausnahme des Ausführungsbeispieles der Figuren 6,7
liegen die Zelleneingänge 13 des Kanals 10 bzw. 11 auf
der einen Seite der Symmetrieebene b-b (Figur 2) und die
Zellenausgänge 13a dieser Kanäle 10, 11 auf der anderen
Seite der Symmetrieebene. Im Ausführungsbeispiel der
Figuren 1-3, 8-10 schließen die auf der einen Seite der Symmetrieebene b-b des Wärmetauschers liegenden stirnseitigen Wandungen 16b einen Winkel $\alpha$ (Figur 1) von ca. 90° ein. Insoweit sind diese stirnseitigen Wandungen 16b nicht nur dazu bestimmt, jede zweite Zelle 16 gegen den Zufluß des Fluidums abzusperren, sondern auch dazu geeignet, als Leitflächen zu dienen,um das gasförmige Fluidum zu den Ausgängen 13a zu leiten, soweit es in der vom Ausgang 13a abgewandten Symmetriehälfte der Zelle durch diese Zelle fließt. Die Neigung der stirnseitigen Wandungen 16b und die damit festgelegte Neigung der Eingänge 13 in die Zellen zur Symmetrieebene b-b bedingen, daß der für einen Kanal 10 bzw. 11 offene Eingangs-Gesamt-Querschnitt größer ist als der halbe Querschnitt dieses Kanals 10 bzw. 11. Die Abmessung F der Zelle 16 parallel zu den Austauschflächen 16a beträgt das Vielfache wie deren Abmessung E quer zur Austauschfläche 16a. Das Aufführungsbeispiel gemäß den Figuren 4 und 5 unterscheidet sich von dem Ausführungsbeispeil nach Figuren 1, 3, 8 - 10 im wesentlichen dadurch, daß die schmalseitigen Wände 14a der Zellen 16 ausgangsseitig je in einen gekrümmten Endabschnitt 16c auslaufen, der stirnseitig in der Symmetrieebene b-b endet. Diese Endabschnitte 16c sind mit den stirnseitigen Wandungen 16b im Beispiel der der Figuren 1- 3 vergleichbar. Die Endabschnitte 16c begrenzen einen Blindraum 24, der von vertikalen Wandungsabschnitten 16d und von horizontalen Wandungsabschnitten 16e überdeckt ist. Diese Wandungsabschnitte 16d und 16e sind strömungstechnisch ohne Bedeutung, erhöhen jedoch die Stabilität und Tragfähigkeit des Registers 23.

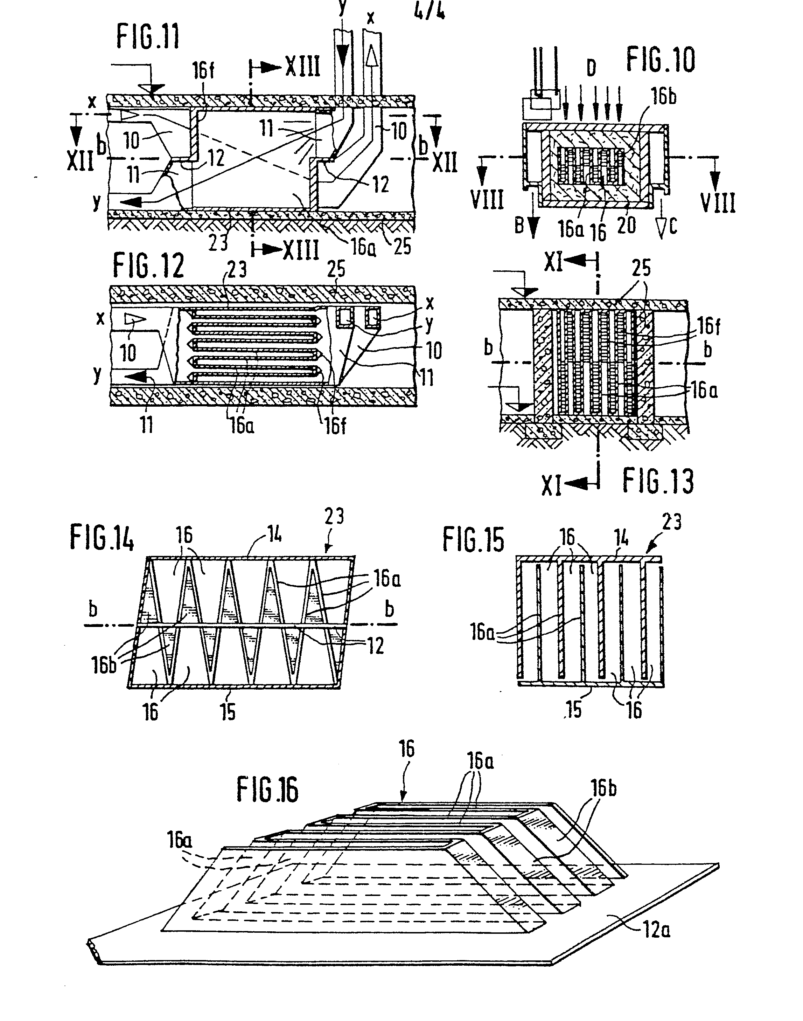

Im Ausführungsbeispiel der Figuren 6 und 7 liegen die Zelleneingänge des Kanals 10 bzw. 11 auf der gleichen Seite der Symmetrieebene b-b der Zellen 16 wie die Zellenausgänge 13a dieses Kanals 10 bzw. 11. Für die Arbeitsweise des Wärmeaustauschers ist es von Bedeutung, daß in jede zweite Zelle 16 des Registers 23 einströmende Fluida niedriger bzw. höherer Temperatur Austauschflächen 16a bestreichen, die quer zur Strömungsrichtung (F in Fig. 1) eine Abmessung aufweisen, die größer ist als die in gleicher Richtung abgenommene Länge des Einganges 13 zur Zelle. Sobald das Flüidum den Eingang passiert hat, breitet es sich über den gesamten Strömungskanal der Zelle aus, wie insbesondere in Figur 2 verdeutlicht ist. Dieser Vorgang kann durch Leitelemente 18 (Fign. 4 und 5) unterstützt sein. Es können auch Störelemente in den Zellen angeordnet sein, welche eine laminare Strömung mehr oder weniger verhindern.Durch den symmetrischen Aufbau des Registers kann der fertigungstechnische Aufwand wesentlich reduziert werden. Es ist beispielsweise möglich, wie aus dem Beispiel gemäß Figur 15 ersichtlich, das Register 23 durch zwei spiegelsymmetrische Teile zu bilden, die so ineinandergesteckt sind, daß die Austauschflächen 16a wechselweise von einem und vom anderen Formteil gebildet sind. Diese Fertigungsart ist auch für das Ausführungsbeispiel gemäß Figur 14 anwendbar, dessen Zellen den Querschnitt eines spitzwinkligen Dreieckes aufweisen. Die ineinandersteckbaren Formstücke können Gußformstücke sein, vorzugsweise Metall-Gußformstücke. Das Beispiel der Figur 16 deutet eine andere rationelle Fertigungsweise an, bei welcher das Register aus zwei zueinander spiegelsymmetrischen, halbschalenartigen Formstücken gebildet ist, die mit Hilfe von Flanschen 12a aneinander befestigbar sind. Diese Flansche 12a können zugleich partiell Teil der gemeinsamen Zwischenwandung der Kanäle 10,11 sein.

Die Figuren 8 -10 zeigen den in eine Raumlüftungsanlage eingebauten Wärmetauscher gemäß den Figuren 1 - 3. Die Raumlüftungsanlage ist in einem kastenförmigen Gehäuse angeordnet, das beispielsweise unterhalb eines Fensters eingefügt sein kann. Die Zuluft gelangt von außen durch den Eingangsschacht A in den Raum 17, wo sie vom Ventilator 21 in den Kanal 10 und von dort in die Eingänge 13 des Registers gedrückt wird. Die aus den Ausgängen 13a des Registers austretende Zuluft gelangt schließlich über den Ausgangsschacht C in den Innenraum. Der andere Luftstrom, z.B. die Abluft gelangt über den Eingangsschacht D und den Kanal 11 in die Eingänge 13 des Registers. Dieser Luftstrom verläßt über den Kanal 11 das Register, welches unterhalb des Kanals 10 liegt. Die Abluft wird schließlich über den parallel zum Register 23 verlaufenden Kanal 22 zum Ausgangsschacht C nach außen geführt. Zur Schalldämpfung sind die Kanäle 10, 11 und das Register 23 in schallschluckende Materialien 19 eingebettet, was auch für den Ventilator gilt; durch sie wird insbesondere der Innenraum von Lauf- und Strömungsgeräuschen abgeschirmt.

Die Großraumlüftungsanlage gemäß den Figuren 11 - 13 ist in das Mauerwerk 25 eingefügt. Das dort benutzte Register 23 von Zellen 16 entspricht etwa der Ausführungsform gemäß den Figuren 4 und 5. Allerdings ist der Querschnitt des Kanals 10 bzw. 11 kleiner als die Summe der aus diesem Kanal 10 bzw. 11 beschickten Zellen. Außerdem wird der Zuluftstrom X unmittelbar nach Austritt aus dem Register 23 im rechten Winkel zur Symmetrieebene abgeführt. Entsprechend wird der Abluftstrom Y in einem rechtwinklig zur Symmetrieebene b-b verlaufenden Kanal 10 unmittelbar an die Registergänge herangeführt.

Patentansprüche:

1. Als bauliche Einheit ausgebildeter kontinuierlicher Wärmeaustauscher (Rekuperator) für gasförmiges Fluidum, das im Gegenstrom an Austauschflächen geführt wird, insbesondere für Raumlüfungsanlagen mit einem Abluft-und einem Zuluftkanal (Kanäle), dadurch gekennzeichnet, daß der das Fluidum niedrigerer Temperatur (10) und der das Fluidum höherer Temperatur führende Kanal (11) in gegensätzlichen Richtungen in ein Register (23) von Zellen (16) münden, welche als gemeinsame Trennwände dienende Austauschflächen (16a) aufweisen, wobei die Eingänge (13) und Ausgänge (13a) der Kanäle (10; 11) in die Zellen (16) je an einer Seite einer quer zu den Austauschflächen (16a) verlaufenden Mittelebene (Symmetrieebene b-b) des Registers (23) liegen und wobei jede zweite Zelle (16) durch eine Stirnwand (16b in Fig. 1-3,6-10,14; 16c in Fig. 4, 5 ; 16f in Fig. 11, 13) gegen den Zufluß des Fluidums aus dem einen Kanal (10 bzw. 11) gesperrt und für den Zufluß aus dem anderen Kanal (11 bzw. 10) offen ist.

2. Wärmeaustauscher nach Patentanspruch 1, dadurch gekennzeichnet, daß die beiden Kanäle (10, 11) von rechteckigem Querschnitt sind und eine gemeinsame Wandung (12) aufweisen und daß die Austauschflächen (16a) im rechten Winkel zur gemeinsamen Wandung (12) stehen.

3. Wärmeaustauscher nach Patentanspruch 1 oder 2, dadurch gekennzeichnet, daß die schmalseitigen Wandungen der Zellen (16) durch eine Verlängerung (14a, 15a) der breitseitigen Wandungen (14, 15) der Kanäle (10, 11) gebildet sind.

4. Wärmeaustauscher nach einem der vorhergehenden Patentansprüche, dadurch gekennzeichnet, daß die Zellen (16) ausschließlich über die Austauschflächen (16a) aneinander grenzen und ihr Gesamtquerschnitt dem Gesamtquerschnitt der Kanäle (10, 11) entspricht.

5. Wärmeaustauscher nach einem der vorhergehenden Patentansprüche, dadurch gekennzeichnet, daß die auf der einen Seite der Symmetrieebene (b-b) des Wärmeaustauschers liegenden stirnseitigen Wandungen (16b) zu den auf der anderen Seite dieser Symmetrieebene liegenden stirnseitigen Wandungen (16b) einen Winkel $\alpha$ von ca. 90° einschließen und in der Symmetrieebene (b-b) aneinander stoßen (Figur 1).

6. Wärmeaustauscher nach einem der vorhergehenden Patentansprüche, dadurch gekennzeichnet, daß die Zelleneingänge (13) des Kanals (10 bzw. 11) auf der einen Seite der Symmetrieebene (b-b in Figur 2 ) und die Zellenausgänge (13a) dieser Kanäle (10;, 11) auf der anderen Seite dieser Symmetrieebene (b-b) liegen (Figuren 1 - 3; 8 - 11; 14).

7. Wärmeaustauscher nach einem der vorhergehenden Patentansprüche 1 - 5, dadurch gekennzeichnet,daß die Zelleneingänge (13) des Kanals (10 bzw. 11) auf der gleichen Seite der Symmetrieebene (b-b) der Zellen (16) liegen wie die Zellenausgänge (13a) dieses Kanals (10 bzw. 11) (Figuren 6, 7).

8. Wärmeaustauscher nach einem der vorhergehenden Patentansprüche 1 bis 4, 6, 7, dadurch gekennzeichnet, daß die schmalseitigen Wände (14a) der Zellen (16) ausgangsseitig in einen gekrümmten Endabschnitt (16c in Figuren 4, 5) oder in eine gegen die Symmetrieebene (b-b) geneigten Endabschnitt (16b in Fig. 1- 3, 6 - 10) auslaufen, der stirnseitig in dieser Symmetrieebene (b-b) endet.

9. Wärmeaustauscher nach Patentanspruch 8, dadurch gekennzeichnet, daß die gekrümmten Endabschnitte (16c) einen Blindraum (24) begrenzen, der von vertikalen (16d) und horizontalen Wandungsabschnitten (16e) überdeckt ist (Figuren 4, 5 ).

10. Wärmeaustauscher nach einem der vorhergehenden Patentansprüche, dadurch gekennzeichnet, daß die Kanäle (10, 11) auf wenigstens einer Seite der Zellen (16) im Winkel zur Symmetrieebene (b-b) verlaufen (Figuren 11, 12).

11. Wärmeaustauscher nach einem der vorhergehenden Patentansprüche, dadurch gekennzeichnet, daß der Querschnitt des Kanals (10 bzw. 11) kleiner ist als die Summe der Querschnitte der aus diesem Kanal (10; 11) beschickten Zellen (Figuren 11 bis 13).

12. Wärmeaustauscher nach einem der vorhergehenden Patentansprüche, dadurch gekennzeichnet, daß die Kanäle 10, 11 und das Register (23) der Zellen (16) von schallschluckenden Stoffen abgegrenzt sind (Figuren 8 - 13).

13. Wärmeaustauscher nach einem der vorhergehenden Patentansprüche, 1, 3-6, 10 - 12, dadurch gekennzeichnet, daß die Austauschflächen (16a) der Zellen (16) einen spitzen Winkel zur Symmetrieebene (b-b) einschließen und den Querschnitt eines spitzwinkligen Dreieckes aufweisen (Fig. 14).

14. Wärmeaustauscher nach einem der vorhergehenden Patentansprüche, dadurch gekennzeichnet, daß das Register der Zellen (16) durch zwei spiegelsymmetrische, ineinander steckbare Formstücke
gebildet ist (Figur 15).

15. Wärmeaustauscher nach einem der vorhergehenden
Patentansprüche, dadurch gekennzeichnet, daß das
Register der Zellen durch zwei halbschalenförmige
Formstücke gebildet ist, welche mittels Flansch
(12a) aneinander befestigt sind (Figur 16).

**FIG.1**

**FIG.2**

**FIG.3**

**FIG.4**

**FIG.5**

FIG.6

FIG.7

FIG.8

FIG.9

FIG.11

FIG.10

FIG.12

FIG.13

FIG.14

FIG.15

FIG.16

4/4

0014863

## Europäisches Patentamt

# EUROPÄISCHER RECHERCHENBERICHT

Nummer der Anmeldung

EP 80 10 0416

| | EINSCHLÄGIGE DOKUMENTE | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| X | AT - B - 338 473 (CONTARDO) <br> * Seite 2, Zeile 60 bis Seite 3, Zeile 2; Fig. 6 * <br> -- | 1,2,6 | F 24 F 7/08 <br> F 28 D 9/00 |
| X | US - A - 4 116 271 (DE LEPELEIRE) <br> * Fig. 7, 9, 13, 8 * <br> -- | 1,3-7, 10 | |
| | FR - A1 - 2 370 238 (AB SVENSKA FLAKT-FABRIKEN) <br> * ganzes Dokument * <br> -- | 1,2, 4-6 | RECHERCHIERTE SACHGEBIETE (Int. Cl.3) |
| | DE - A - 2 133 728 (TRAUGOTT) <br> * Fig. 1; Fig. 1, Positionen 22, 23, Fig. 3, Position 31; Fig. 1, Positionen 17, 18; Fig. 1, Positionen 24 bis 27 * <br> -- | 1-3, 6,10 | F 24 F 5/00 <br> F 24 F 7/00 <br> F 28 D 9/00 |
| | DE - A1 - 2 531 247 (EBERSPÄCHER) <br> * Seite 8, Absatz 2; Fig. 2 und 3, Position 11 * <br> -- | 12 | |
| | DE - A - 1 922 406 (KRESIC) <br> * Seite 2, Absatz 2 * <br> -- | 1 | KATEGORIE DER GENANNTEN DOKUMENTE |
| | FR - A - 1 023 554 (AB SVENSKA FLAKT-FABRIKEN) <br> * Fig. 8 * <br> -- | 1 | X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze |
| D,A | DE - A1 - 2 720 991 (PAUL) <br> ---- | | E: kollidierende Anmeldung <br> D: in der Anmeldung angeführtes Dokument <br> L: aus andern Gründen angeführtes Dokument |

X Der vorliegende Recherchenbericht wurde für alle Patentansprüche erstellt.

&: Mitglied der gleichen Patentfamilie, übereinstimmendes Dokument

| Recherchenort | Abschlußdatum der Recherche | Prüfer |
|---|---|---|
| Berlin | 08-05-1980 | PIEPER |

EPA form 1503.1 06.78